# EUROPEAN PATENT SPECIFICATION

(11) **EP 3 274 541 B1**
(45) Date of publication and mention of the grant of the patent: **30.10.2019**
(21) Application number: 16726621.2
(22) Date of filing: 21.03.2016
(51) Int. Cl.: E06C 5/00, B60R 3/00, E06C 1/06

(54) **VEHICLE-MOUNTABLE STEP APPARATUS**
FAHRZEUGMONTIERBARE SCHRITTVORRICHTUNG
APPAREIL DE MARCHE-PIED POUVANT ÊTRE MONTÉ SUR UN VÉHICULE

(30) Priority: 27.03.2015 GB 201505283
(43) Date of publication of application: 31.01.2018
(73) Proprietor: Donnebaum, Ronald Alois, Buckinghamshire HP20 2EA (GB)
(72) Inventor: Donnebaum, Ronald Alois, Buckinghamshire HP20 2EA (GB)
(74) Representative: Abraham, Richard
(86) International application number: PCT/GB2016/050774
(87) International publication number: WO 2016/156795

(56) References cited:
- US-A- 5 704 448
- US-A1- 2008 277 199

## Description

The present invention relates to vehicle-mountable step apparatus for providing access to a roof of a vehicle and particularly, but not exclusively, to roll-up vehicle-mountable step apparatus.

A variety of vehicle-mountable step/ladder devices are known in the art for providing access to items mounted on a vehicle roof (e.g. items mounted on a roof rack such as roof boxes or sports equipment). A number of solutions exist that involve mounting a stepped structure to a rear wheel of a vehicle. However, the positioning of such devices makes it awkward (and potentially unsafe) to access central and front parts of a vehicle roof.

A more conveniently locatable device is disclosed in US 2011/0303486 which discloses a ladder-like structure configured to attach to opposed front and rear struts of a roof rack mounted to the roof of a vehicle. However, despite the appeal of this design, for a roof rack with a typical recommended load bearing range of 50-100 kg, the use of such a device when the roof rack is fully loaded may be problematic depending upon the strength of the roof rack mounting and the weight of the individual using the ladder.

Document US 2008/0277199 A1 discloses a vehicle-mountable step apparatus according to the preamble of claims 1 and 7.

The present applicant has identified the need for an improved vehicle-mountable step apparatus that overcomes or at least alleviates problems associated with the prior art.

In accordance with a first aspect of the present invention as defined in claim 1, there is provided vehicle-mountable step apparatus (e.g. vehicle-mountable ladder) for providing access to a roof of a vehicle, the vehicle-mountable step apparatus comprising: a step structure (e.g. ladder structure) defining at least one rung or step; and a pillar attachment (e.g. anchor or fastener) configured to suspend the step structure from a central side pillar of the vehicle (e.g. when front and rear side windows provided either side of the central side pillar are opened (e.g. lowered)).

In this way, a stowable vehicle-mountable step apparatus is provided which takes advantage of the inherent strength of the central side pillar (e.g. "B" pillar) of a vehicle to provide support for central stepped access without applying an additional load to a roof rack system mounted on the roof. Typically the central side pillar will be one of the strongest parts of a vehicle frame and therefore more than capable of taking the load of the step apparatus when in use.

According to the invention, the pillar attachment comprises a looped portion configured to (fully or partially) loop around the central side pillar of the vehicle. The looped portion may be configurable between a disengaged configuration for allowing engagement/disengagement of the pillar attachment with the central side pillar and an engaged configuration for maintaining engagement between the pillar attachment and central side pillar.

In one embodiment, the looped portion may be an open looped portion (e.g. rigid hook) or a closed looped portion.

According to the invention, the looped portion includes a compressible padded region configured to abut the central side pillar of the vehicle (e.g. and adjacent window frame region).

In the case of a closed loop portion, the looped portion may comprise a flexible element (e.g. strap). The flexible element may extend through a collar (e.g. U-shaped collar) configured to be urged against the central side pillar. The collar may define the compressible region.

In another example, not forming part of the claimed subject-matter, the pillar attachment is configured to suspend the step structure from a seat belt mounting point on the central side pillar.

In a first implementation, for vehicles having front and rear side windows that are openable (e.g. lowerable) so that the pillar attachment when looped around the central side pillar can rest against a lower window frame part substantially without applying pressure to the front and rear windows, the pillar attachment is configured to be connected to a central side pillar on a first side of the vehicle and the step structure is configured to hang from the pillar attachment on the first side of the vehicle.

In a second implementation, for vehicles having front or rear side windows that are not adequately openable for the first implementation, the pillar attachment is configured to be connected to a central side pillar on a first side of a vehicle and the vehicle-mountable step apparatus further comprises a roof section configured to allow the step structure to be positioned on a second side of the vehicle opposed to the first side with the pillar attachment urged against an upper part of the central side pillar (e.g. and adjacent upper window frame part) with the roof section extending over the roof to the second side of the vehicle. In this way, the vehicle-mountable step apparatus of the present invention may be used with vehicles having side windows that are only partially openable.

One or more spacer devices (e.g. spacer bars) may be provided on the step structure to prevent contact between the step structure and windows on the second side of the vehicle.

In one embodiment, the vehicle-mountable step apparatus includes a roof protector (e.g. padding provided on an underside of the roof section or a separate protective mat positionable between the roof section and the roof).

In one embodiment, the vehicle-mountable step apparatus is at least partially foldable (e.g. for ease of storage). For example, the vehicle-mountable step apparatus may include a roll-up portion.

In accordance with a second aspect of the present invention, there is provided a method of providing access to a roof of a vehicle including openable front and rear side windows, the method comprising: providing vehicle-mountable step apparatus (e.g. vehicle-mountable ladder) comprising: a step structure (e.g. ladder structure) defining at least one rung or step; and a pillar attachment (e.g. anchor or fastener) configured to suspend the step structure from a central side pillar of the vehicle; opening (e.g. lowering) the front and rear side windows on a first side of the vehicle; and attaching the pillar attachment to a central side pillar of the vehicle provided between the front and rear side windows to suspend the step structure therefrom.

In one embodiment, the attaching step comprises forming a loop (e.g. open or closed loop) around the central side pillar.

In another example, not forming part of the claimed subject-matter, the attaching step comprises suspending the step structure from a seat belt mounting point on the central side pillar.

In a first implementation (where the vehicle has front and rear side windows that are openable (e.g. lowerable) so that the pillar attachment when looped around the central side pillar can rest against a lower window frame part substantially without applying pressure to the front and rear windows), the method may further comprise the step of positioning the step structure to hang below the pillar attachment on the first side of the vehicle with the pillar attachment resting against a lower part of the central side pillar (e.g. and lower window frame parts adjacent the central side pillar).

In a second implementation (for vehicles having front or rear side windows that are not adequately openable for the first implementation), the vehicle-mountable step apparatus is supplied with a roof section configured to extend over the roof of the vehicle and the method may further comprise the step of positioning the step structure on a second side of the vehicle opposed to the first side with the pillar attachment urged against an upper part of the central side pillar (e.g. and upper window frame parts adjacent the central side pillar) and the roof section extending over the roof to the second side of the vehicle.

In one embodiment, the method comprises positioning a protective layer (e.g. mat) between the roof section and the roof of the vehicle.

An embodiment of the present invention will now be described by way of example with reference to the accompanying drawings in which:
Figure 1 is a schematic view of a vehicle-mountable ladder in accordance with an embodiment of the present invention mounted on a vehicle in a first configuration;
Figures 2A-2D are detailed schematic views of features of the vehicle-mountable ladder of Figure 1; and
Figure 3 is a schematic view of the vehicle-mountable ladder with roof section extender straps mounted on a vehicle in a second configuration.

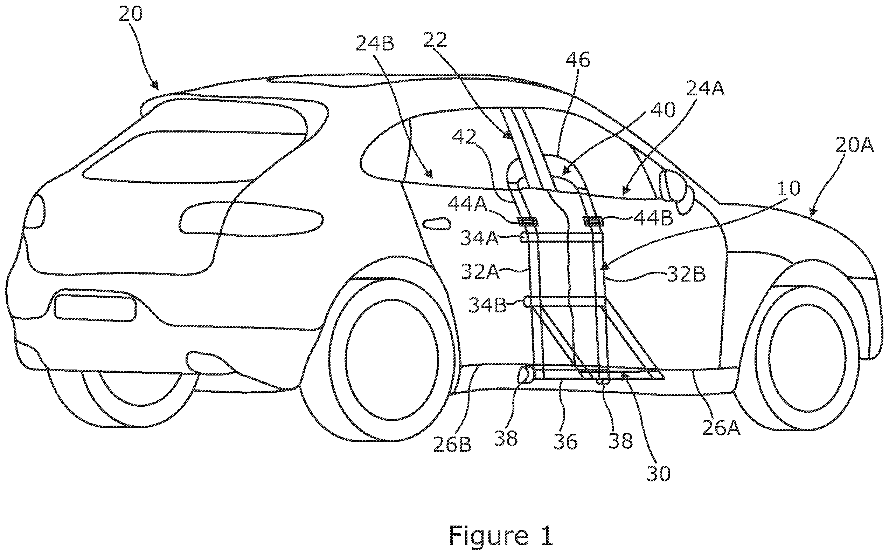

Figure 1 shows a roll-up vehicle-mountable ladder 10 for providing access to a roof of a vehicle (e.g. car) 20 with the vehicle-mountable ladder installed in a first configuration.

As illustrated, vehicle-mountable ladder 10 comprises a ladder structure 30 and a pillar attachment 40 for engaging a central side pillar (or "B" pillar) 22 on a first side 20A of vehicle 20 when front and rear side windows 24A, 24B are fully retracted inside front and rear door panels 26A, 26B.

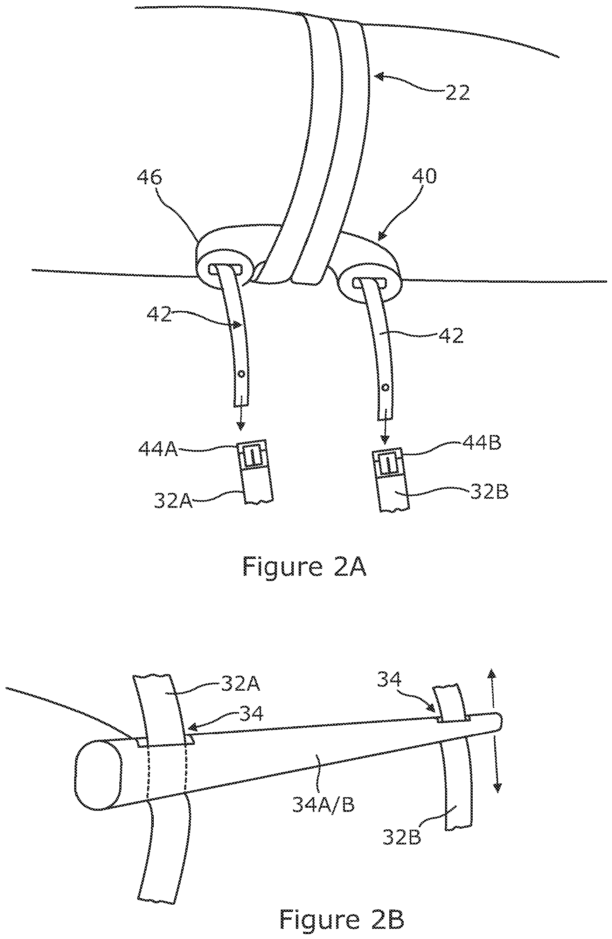

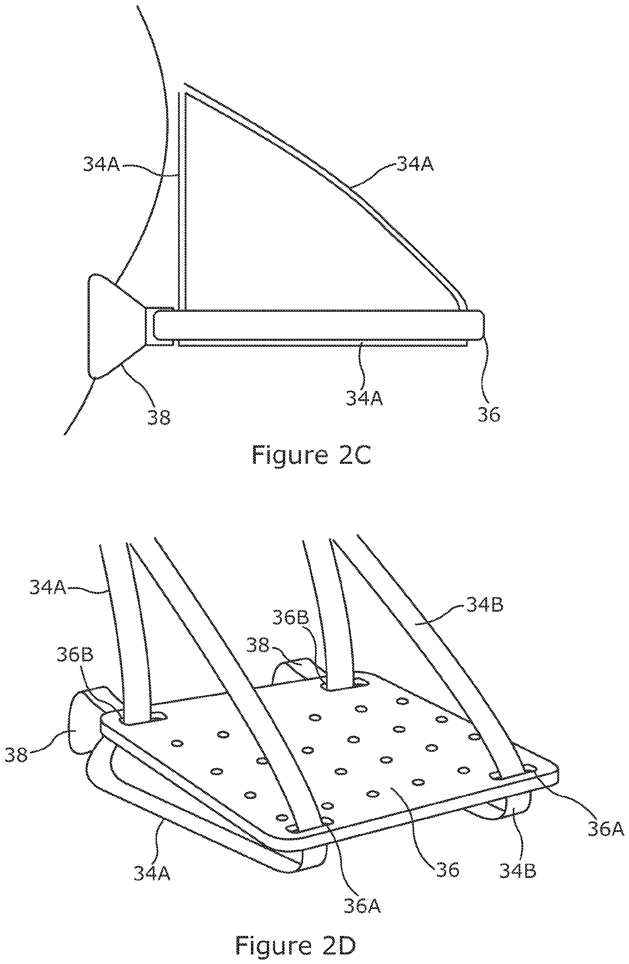

Ladder structure 30 comprises a pair of side straps 32A, 32B (typically provided by conventional webbing straps capable of providing up to 500kg breaking strain) connected by first and second cross-members 34A, 34B and by a step-forming plate 36. Each side strap 32A, 32B extends through slots 34 provided in first and second cross-members 34A, 34B and is additionally formed into a closed loop (held by stitching - not shown) extending through front a rear slots 36A, 36B provided at opposed sides of plate 36 to form a secure step (see Figure 2D). Step-forming plate 36 may be formed from aluminium or injection moulded plastics material and may include an anti-slip upper surface. First and second cross-members 34A, 34B may typically be formed from a high-density foamed material to protect front and rear door panels 26A, 26B. Slots 34 are configured to allow first and second cross-members 34A, 34B to be moved relative to side straps 32A, 32B to adjust the position of first and second cross-members 34A, 34B to offer optimum protection to the front and rear door panels 26A, 26B

Step-forming plate 36 may be additionally connected to a pair of wedge-shaped buffer pads 38 (e.g. a pair of soft mouldings that clip onto opposed sides of the step-forming plate 36 to prevent the step-forming plate 36 being pushed inwards against a curved lower section of door panels 26A, 26B - see Figure 2C).

Pillar attachment (or anchor) 40 comprises a strap section 42 connectable to side straps 32A, 32B by quick-release buckles 44A, 44B configured to form a closed loop around "B" pillar 22 when attached to side straps 32A, 3B via buckles 44A, 44B (see Figure 2A). Pillar attachment 40 further includes a soft flexible collar 46 formed from a foamed rubber moulding through which strap section 42 is threaded to prevent damage to the vehicle and to spread the load applied to the vehicle when a user stands on step-forming plate 36.

After use to access the roof of vehicle 20, vehicle-mountable ladder 10 can be readily removed using one or other of the quick-release buckles 44A, 44B and the main body of the ladder can be rolled up for compact storage (e.g. in the vehicle).

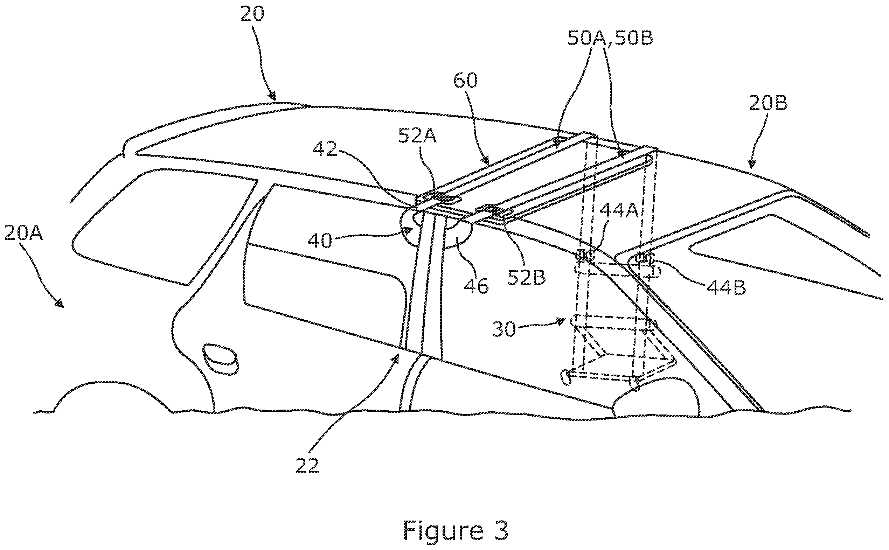

Figure 3 shows vehicle-mountable ladder 10 installed in a second configuration for use with vehicles having a front or rear side window 24A, 24B that is not adequately retractable to allow use in the first installation without risk of damaging the window. As illustrated, this configuration involves the addition of a pair of roof section extender straps 50A, 50B connected between pillar attachment 40 and side straps 32A, using quick-release buckles 44A, 44B provided on straps 32A, 32B and a further set of quick-release buckles 52A, 52B provided on roof section extender straps 50A, 50B to connect with strap section 42.

In this second configuration the pillar attachment 40 is configured to be connected to "B" pillar 22 on the first side 20A of vehicle 20 as before, but ladder structure 30 is positioned to hang from a second side 20B of the vehicle when front and rear side windows 24A, 24B are only partially retracted inside front and rear door panels 26A, 26B with roof section extender straps 50A, 50B extending over the roof of the vehicle 20. In this way, pillar attachment 40 is urged against an upper part of "B" pillar 22/upper part of front and rear door panels 26A, 26B to suspend ladder structure 30 on the other side of the vehicle. As illustrated a protective soft foam/rubber mat 60 may be provided between roof section extender straps 50A, 50B and the roof of the vehicle to protect the roof. First and second cross-members 34A, 34B may be positioned to prevent contact between ladder structure 30 and windows on the second side 20B of the vehicle 20.

Advantageously, the vehicle-mountable ladder 10 of the present invention may be used with any type of vehicle having retractable front and rear side windows.

## Claims

1. Vehicle-mountable step apparatus (10) for providing access to a roof of a vehicle (20), the vehicle-mountable step apparatus (10) comprising:
a step structure (30) defining at least one rung or step; and
an attachment configured to suspend the step structure (30) from the vehicle;
**characterised in that** the attachment is a pillar attachment (40) comprising a looped portion including a compressible padded region (46), the looped portion being configured to loop around a central side pillar (22) of the vehicle (20) to suspend the step structure (30) from the central side pillar (22) of the vehicle (20) with the compressible padded region (46) configured to abut the central side pillar (22) of the vehicle and/or a door region.

2. Apparatus (10) according to claim 1, wherein the looped portion is configurable between a disengaged configuration for allowing engagement/disengagement of the pillar attachment (40) with the central side pillar (22) and an engaged configuration for maintaining engagement between the pillar attachment (40) and central side pillar (22).

3. Apparatus (10) according to claim 1 or claim 2, wherein the looped portion is a closed looped portion.

4. Apparatus (10) according to claim 3, wherein the looped portion comprises a flexible element (42) extending through a collar (46) configured to be urged against the central side pillar (22) and wherein the collar (46) defines the compressible padded region.

5. Apparatus (10) according to any of the preceding claims, wherein the pillar attachment (40) is configured to be connected to a central side pillar on a first side (20A) of the vehicle (22) and the step structure (30) is configured to hang from the pillar attachment (40) on the first side (20A) of the vehicle (20).

6. Apparatus (10) according to any of claims 1-4, wherein the pillar attachment (40) is configured to be connected to a central side pillar (22) on a first side (20A) of a vehicle (20) and the vehicle-mountable step apparatus further comprises a roof section (50A, 50B) configured to allow the step structure (30) to be positioned on a second side (20B) of the vehicle (20) opposed to the first side (20A) with the pillar attachment (40) urged against an upper part of the central side pillar (22) with the roof section (50A, 50B) extending over the roof to the second side (20B) of the vehicle (20).

7. Vehicle-mountable step apparatus (10) for providing access to a roof of a vehicle (20), the vehicle-mountable step apparatus (10) comprising:
a step structure (30) defining at least one rung or step; and
an attachment configured to suspend the step structure (30) from the vehicle (20);
**characterised in that** the attachment is a pillar attachment (40) configured to suspend the step structure (30) from a central side pillar (22) of the vehicle (20), wherein the pillar attachment (40) is configured to be connected to a central side pillar (22) on a first side (20A) of the vehicle (20) and the vehicle-mountable step apparatus (10) further comprises a roof section (50A, 50B) configured to allow the step structure (30) to be positioned on a second side (20B) of the vehicle (20) opposed to the first side (20A) with the pillar attachment (40) urged against an upper part of the central side pillar (22) with the roof section (50A, 50B) extending over the roof to the second side (20B) of the vehicle (20).

8. Apparatus (10) according to claim 6 or claim 7, wherein one or more spacer devices (34A, 34B) is provided on the step structure (30) to prevent contact between the step structure (30) and windows on the second side (20B) of the vehicle (20).

9. Apparatus (10) according to any of claims 6-8, wherein the vehicle-mountable step apparatus (10) includes a roof protector (60).

10. Apparatus (10) according to any of the preceding claims, wherein the vehicle-mountable step apparatus (10) is at least partially foldable.

11. A method of providing access to a roof of a vehicle (20) including openable front and rear side windows (24A, 24B), the method comprising:
providing vehicle-mountable step apparatus (10) comprising:
a step structure (30) defining at least one rung or step; and
a pillar attachment (40) configured to suspend the step structure (30) from a central side pillar (22) of the vehicle (20);
opening the front and rear side windows (24A, 24B) on a first side (20A) of the vehicle (20); and
attaching the pillar attachment (40) to a central side pillar (22) of the vehicle (20) provided between the front and rear side windows (24A, 24B) to suspend the step structure (30) therefrom.

12. A method according to claim 11, wherein the attaching step comprises forming a loop around the central side pillar (22).

13. A method according to claim 11, wherein the attaching step comprises suspending the step structure (30) from a seat belt mounting point on the central side pillar (22).

14. A method according to any of claims 11-13, wherein the method further comprises the step of positioning the step structure (30) to hang below the pillar attachment (40) on the first side (20A) of the vehicle (20) with the pillar attachment (40) resting against a lower part of the central side pillar (22).

15. A method according to any of claims 11-13, wherein the vehicle-mountable step apparatus (10) is supplied with a roof section (50A, 50B) configured to extend over the roof of the vehicle (20) and the method further comprises the step of positioning the step structure (30) on a second side (20B) of the vehicle (20) opposed to the first side (20A) with the pillar attachment (40) urged against an upper part of the central side pillar (22) and the roof section (50A, 50B) extending over the roof to the second side (20B) of the vehicle (20).

## Patentansprüche

1. Fahrzeugmontierbare Schrittvorrichtung (10) zum Bereitstellen eines Zugangs zu einem Dach eines Fahrzeugs (20), wobei die fahrzeugmontierbare Schrittvorrichtung (10) Folgendes umfasst:
eine Schrittstruktur (30), die zumindest eine Sprosse oder Schritt definiert; und
eine Befestigung, die konfiguriert ist, um die Schrittstruktur (30) an dem Fahrzeug aufzuhängen;
**dadurch gekennzeichnet, dass** die Befestigung eine Säulenbefestigung (40) ist, die ein Schlaufensegment umfasst, der einen komprimierbaren gepolsterten Bereich (46) enthält, wobei das Schlaufensegment konfiguriert ist, um eine mittleren Seitensäule (22) des Fahrzeugs (20) zu umschlingen, um die Schrittstruktur (30) an der mittleren Seitensäule (22) des Fahrzeugs (20) mit dem komprimierbaren gepolsterten Bereich (46) aufzuhängen, der konfiguriert ist, um an der mittleren Seitensäule (22) des Fahrzeugs und/oder eines Türbereichs anzuliegen.

2. Vorrichtung (10) nach Anspruch 1, wobei das Schlaufensegment zwischen einer gelösten Konfiguration zum Ermöglichen des Ineingriffbringens/Lösens der Säulenbefestigung (40) an die/von der mittleren Seitensäule (22) und einer Eingriffskonfiguration zum Aufrechterhalten des Eingriffs zwischen der Säulenbefestigung (40) und der mittleren Seitensäule (22) konfigurierbar ist.

3. Vorrichtung (10) nach Anspruch 1 oder Anspruch 2, wobei das Schlaufensegment ein geschlossenes Schlaufensegment ist.

4. Vorrichtung (10) nach Anspruch 3, wobei das Schlaufensegment ein flexibles Element (42) umfasst, das sich durch einen Ring (46) erstreckt, der konfiguriert ist, um an die mittlere Seitensäule (22) gedrückt zu werden und wobei der Ring (46) den komprimierbaren gepolsterten Bereich definiert.

5. Vorrichtung (10) nach einem der vorhergehenden Ansprüche, wobei die Säulenbefestigung (40) konfiguriert ist, um mit der mittleren Seitensäule auf einer ersten Seite (20A) des Fahrzeugs (22) verbunden zu sein und die Schrittstruktur (30) konfiguriert ist, um aus der Säulenbefestigung (40) auf der ersten Seite (20A) des Fahrzeugs (20) zu hängen.

6. Vorrichtung (10) nach einem der Ansprüche 1 - 4, wobei die Säulenbefestigung (40) konfiguriert ist, um mit der mittleren Seitensäule (22) auf einer ersten Seite (20A) des Fahrzeugs (20) verbunden zu sein und die fahrzeugmontierbare Schrittvorrichtung ferner einen Dachabschnitt (50A, 50B) umfasst, der konfiguriert ist, um der Schrittstruktur (30) zu ermöglichen, an einer zweiten Seite (20B) des Fahrzeugs (20) gegenüber der ersten Seite (20A) positioniert zu sein, wobei die Säulenbefestigung (40) gegen einen oberen Teil der mittleren Seitensäule (22) gedrückt wird, wobei der Dachabschnitt (50A, 50 B) sich über das Dach zur zweiten Seite (20B) des Fahrzeugs (20) erstreckt.

7. Fahrzeugmontierbare Schrittvorrichtung (10) zum Bereitstellen eines Zugangs zu einem Dach eines Fahrzeugs (20), wobei die fahrzeugmontierbare Schrittvorrichtung (10) Folgendes umfasst:
eine Schrittstruktur (30), die zumindest eine Sprosse oder Schritt definiert; und eine Befestigung, die konfiguriert ist, um die Schrittstruktur (30) an dem Fahrzeug (20) aufzuhängen; **dadurch gekennzeichnet, dass** die Befestigung eine Säulenbefestigung (40) ist, die konfiguriert ist, um die Schrittstruktur (30) an einer mittleren Seitensäule (22) des Fahrzeugs (20) aufzuhängen, wobei die Säulenbefestigung (40) konfiguriert ist, um mit einer mittleren Seitensäule (22) auf einer ersten Seite (20 A) des Fahrzeugs (20) verbunden zu sein und die fahrzeugmontierbare Schrittvorrichtung (10) ferner einen Dachabschnitt (50A, 50B) umfasst, der konfiguriert ist, um der Schrittstruktur (30) zu ermöglichen, an einer zweiten Seite (20B) des Fahrzeugs (20) gegenüber der ersten Seite (20A) positioniert zu sein, wobei die Säulenbefestigung (40) gegen einen oberen Teil der mittleren Seitensäule (22) gedrückt wird, wobei der Dachabschnitt (50A, 50 B) sich über das Dach zur zweiten Seite (20B) des Fahrzeugs (20) erstreckt.

8. Vorrichtung (10) nach Anspruch 6 oder Anspruch 7, wobei ein oder mehrere Abstandhalter (34A, 34B) auf der Schrittstruktur (30) bereitgestellt werden, um den Kontakt zwischen der Schrittstruktur (30) und den Fenstern auf der zweiten Seite (20B) des Fahrzeugs (20) zu verhindern.

9. Vorrichtung (10) nach einem der Ansprüche 6 - 8, wobei die fahrzeugmontierbare Schrittvorrichtung (10) einen Dachschutz (60) enthält.

10. Vorrichtung (10) nach einem der vorhergehenden Ansprüche, wobei die fahrzeugmontierbare Schrittvorrichtung (10) zumindest teilweise faltbar ist.

11. Verfahren zum Bereitstellen eines Zugangs zu einem Dach eines Fahrzeugs (20), enthaltend zu öffnende vordere und hintere Seitenfenster (24A, 24B), wobei das Verfahren Folgendes umfasst:
Bereitstellen einer fahrzeugmontierbaren Schrittvorrichtung (10), die Folgendes umfasst:
eine Schrittstruktur (30), die zumindest eine Sprosse oder Schritt definiert; und eine Säulenbefestigung (40), die konfiguriert ist, um die Schrittstruktur (30) an einer mittleren Seitensäule (22) des Fahrzeugs (20) aufzuhängen;
Öffnen der vorderen und hinteren Seitenfenstern (24A, 24B) auf einer ersten Seite (20A) des Fahrzeugs (20); und
Befestigen der Säulenbefestigung (40) an eine mittlere Seitensäule (22) des Fahrzeugs (20), die zwischen den vorderen und hinteren Seitenfenstern (24A, 24B) bereitgestellt ist, um die Schrittstruktur (30) hieran aufzuhängen.

12. Verfahren nach Anspruch 11, wobei der Schritt des Befestigens das Bilden einer Schlaufe um die mittlere Seitensäule (22) umfasst.

13. Verfahren nach Anspruch 11, wobei der Schritt des Befestigens das Aufhängen der Schrittstruktur (30) von einem Gurtmontagepunkt auf der mittleren Seitensäule (22) umfasst.

14. Verfahren nach einem der Ansprüche 11 - 13, wobei das Verfahren ferner den Schritt des Positionierens der Schrittstruktur (30) umfasst, um unter der Säulenbefestigung (40) auf der ersten Seite (20A) des Fahrzeugs (20) zu hängen, wobei die Säulenbefestigung (40) gegen einen unteren Teil der mittleren Seitensäule (22) aufliegt.

15. Verfahren nach einem der Ansprüche 11 - 13, wobei die fahrzeugmontierbare Schrittvorrichtung (10) mit einem Dachabschnitt (50A, 50B) geliefert wird, der konfiguriert ist, um sich über das Dach des Fahrzeugs (20) zu erstrecken und das Verfahren ferner den Schritt des Positionierens der Schrittstruktur (30) auf einer zweiten Seite (20B) des Fahrzeugs (20) gegenüber der erstem Seite (20A) umfasst, wobei die Säulenbefestigung (40) gegen einen oberen Teil der mittleren Seitensäule (22) gedrückt wird und der Dachabschnitt (50A, 50B) sich über das Dach zur zweiten Seite (20B) des Fahrzeugs (20) erstreckt.

## Revendications

1. Dispositif de marches fixable à un véhicule (10) destiné à donner accès à un toit d'un véhicule (20), le dispositif de marches fixable à un véhicule (10) comprenant :
une structure de marches (30) définissant au moins un échelon ou une marche ; et une attache configurée pour suspendre la structure de marches (30) depuis le véhicule ; **caractérisé en ce que** l'attache est une attache sur pied (40) comprenant une partie en boucle incluant une zone rembourrée compressible (46), la partie en boucle étant configurée pour former une boucle autour d'un pied milieu latéral (22) du véhicule (20) pour suspendre la structure de marches (30) depuis le pied milieu latéral (22) du véhicule (20) avec la zone rembourrée compressible (46) configurée pour venir en en butée contre le pied latéral central (22) du véhicule et/ou une zone de portière.

2. Dispositif (10) selon la revendication 1, dans lequel la partie en boucle est configurable entre une configuration désengagée permettant l'engagement/désengagement de l'attache sur pied (40) avec le pied milieu latéral (22) et une configuration engagée permettant le maintien de l'engagement entre l'attache sur pied (40) et le pied milieu latéral (22).

3. Dispositif (10) selon la revendication 1 ou 2, dans lequel la partie en boucle est une partie en boucle fermée.

4. Dispositif (10) selon la revendication 3, dans lequel la partie en boucle comprend un élément flexible (42) s'étendant à travers un collier (46) configuré pour être poussé contre le pied milieu latéral (22) et dans lequel le collier (46) définit la partie rembourrée compressible.

5. Dispositif (10) selon l'une quelconque des revendications précédentes, dans lequel l'attache sur pied (40) est configurée pour être raccordée à un pied milieu latéral sur un premier côté (20A) du véhicule (22) et la structure de marches (30) est configurée pour pendre depuis l'attache sur pied (40) sur le premier côté (20A) du véhicule (20).

6. Dispositif (10) selon l'une quelconque des revendications 1 à 4, dans lequel l'attache sur pied (40) est configurée pour être raccordée à un pied milieu latéral (22) sur un premier côté (20A) d'un véhicule (20) et le dispositif de marches fixable à un véhicule comprend en outre une section de toit (50A, 50B) configurée pour permettre à la structure de marches (30) d'être positionnée sur un deuxième côté (20B) du véhicule (20) opposé au premier côté (20A) avec l'attache sur pied (40) poussée contre une partie supérieure du pied milieu latéral (22) avec la section de toit (50A, 50B) s'étendant au-dessus du toit jusqu'au deuxième côté (20B) du véhicule (20).

7. Dispositif de marches fixable à un véhicule (10) destiné à donner accès à un toit d'un véhicule (20), le dispositif de marches fixable à un véhicule (10) comprenant :
une structure de marches (30) définissant au moins un échelon ou une marche ; et une attache configurée pour suspendre la structure de marches (30) depuis le véhicule (20) ; **caractérisé en ce que** l'attache est une attache sur pied (40) configurée pour suspendre la structure de marches (30) depuis un pied milieu latéral (22) du véhicule (20), dans lequel l'attache sur pied (40) est configurée pour être raccordée à un pied milieu latéral (22) sur un premier côté (20 A) du véhicule (20) et le dispositif de marches fixable à un véhicule (10) comprend en outre une section de toit (50A, 50B) configurée pour permettre à la structure de marches (30) d'être positionnée sur un deuxième côté (20B) du véhicule (20) opposé au premier côté (20A) avec l'attache sur pied (40) poussée contre une partie supérieure du pied milieu latéral (22) avec la section de toit (50A, 50B) s'étendant au-dessus du toit jusqu'au deuxième côté (20B) du véhicule (20).

8. Dispositif (10) selon la revendication 6 ou 7, dans lequel un ou plusieurs dispositifs espaceurs (34A, 34B) sont prévus sur la structure de marches (30) pour empêcher un contact entre la structure de marches (30) et des fenêtres sur le deuxième côté (20B) du véhicule (20).

9. Dispositif (10) selon l'une quelconque des revendications 6 à 8, dans lequel le dispositif de marches fixable à un véhicule (10) inclut une protection de toit (60).

10. Dispositif (10) selon l'une quelconque des revendications précédentes, dans lequel le dispositif de marches fixable à un véhicule (10) est au moins partiellement pliable.

11. Procédé pour donner accès à un toit d'un véhicule (20) incluant des fenêtres latérales avant et arrière (24A, 24B), le procédé comprenant :
la fourniture du dispositif de marches fixable à un véhicule (10) comprenant :
une structure de marches (30) définissant au moins un échelon ou une marche ; et une attache sur pied (40) configurée pour suspendre la structure de marches (30) depuis un pied milieu latéral (22) du véhicule (20) ;
l'ouverture des fenêtres latérales avant et arrière (24A, 24B) sur un premier côté (20A) du véhicule (20) ; et
l'attache de l'attache sur pied (40) à un pied milieu latéral (22) du véhicule (20) prévu entre les fenêtres latérales avant et arrière (24A, 24B) pour suspendre la structure de marches (30) depuis celui-ci.

12. Procédé selon la revendication 11, dans lequel l'étape d'attache comprend la formation d'une boucle autour du pied milieu latéral (22).

13. Procédé selon la revendication 11, dans lequel l'étape d'attache comprend la suspension de la structure de marches (30) depuis un point de fixation de ceinture de sécurité sur le pied milieu latéral (22).

14. Procédé selon l'une quelconque des revendications 11 à 13, dans lequel le procédé comprend en outre l'étape de positionnement de la structure de marches (30) pour pendre sous l'attache sur pied (40) sur le premier côté (20A) du véhicule (20) avec l'attache sur pied (40) reposant contre une partie inférieure du pied milieu latéral (22).

15. Procédé selon l'une quelconque des revendications 11 à 13, dans lequel le dispositif de marches fixable à un véhicule (10) est fourni avec une section de toit (50A, 50B) configurée pour s'étendre au-dessus du toit du véhicule (20) et le procédé comprend en outre l'étape de positionnement de la structure de marches (30) sur un deuxième côté (20B) du véhicule (20) opposé au premier côté (20A) avec l'attache sur pied (40) poussée contre une partie supérieure du pied milieu latéral (22) avec la section de toit (50A, 50B) s'étendant au-dessus du toit jusqu'au deuxième côté (20B) du véhicule (20).
